# EUROPÄISCHE PATENTSCHRIFT

(11) **EP 0 778 067 B1**
(45) Veröffentlichungstag und Bekanntmachung des Hinweises auf die Patenterteilung: **22.08.2001**
(21) Anmeldenummer: 95119181.6
(22) Anmeldetag: 06.12.1995
(51) Int. Cl.: B01D 53/00, B01D 53/50, B01D 53/68

(54) **Anlage zur Reinigung von Rauchgasen mit unterschiedlichen Gehalten an sauren Komponenten und Verfahren zum Betrieb der Anlage**
Apparatus for purifying smokes containing acid compounds of different concentration acid process for operating the apparatus
Dispositif pour purifier les fumées contenant des composants acides de concentrations différentes et procédé de fonctionnement du dispositif

(43) Veröffentlichungstag der Anmeldung: 11.06.1997
(73) Patentinhaber: Lurgi Lentjes Bischoff GmbH, 45136 Essen (DE)
(72) Erfinder: Firnhaber, Bernhard Dr., D-45131 Essen (DE); Lang, Michael, D-45481 Mülheim (DE); Starck, Cort, D-46286 Dorsten (DE); Schulte, Wolfgang, D-40789 Monheim (DE)
(74) Vertreter: Honke, Manfred, Dr.-Ing.

(56) Entgegenhaltungen:
- EP-A- 0 318 674
- WO-A-94/20199
- DE-A- 4 401 441
- DE-C- 4 032 945

## Beschreibung

Die Erfindung betrifft ein Verfahren zur Reinigung von Rauchgasen, die Schwefeloxide und Halogene enthalten, wobei das Rauchgas in zwei hintereinandergeschalteten Rauchgaswaschtürmen gewaschen wird und für die erste Rauchgaswäsche eine Ammoniumsalze enthaltende Waschlösung verwendet wird. Dem Waschflüssigkeitskreislauf des Rauchgaswaschturms wird Ammoniakwasser zugegeben. Aus dem Waschflüssigkeitskreislauf wird ein Waschlösungsteilstrom ausgeschleust, der einer wirtschaftlichen Verwertung, z.B. zu Düngemitteln, zugeführt werden kann. Ein solches Verfahren ist aus EP-A 0 318 674 bekannt. Das Verfahren ist einsetzbar zur Reinigung von Kraftwerksrauchgasen sowie Rauchgasen von Müllverbrennungsanlagen, die unterschiedliche Gehalte an sauren Komponenten, insbesondere Schwefeloxidkomponenten und Halogenkomponenten, aufweisen.

Ähnliche Verfahren sind aus DE-C 29 05 719 und DE-C 29 28 526 bekannt.

Im Rahmen der bekannten Maßnahmen wird die Ammoniumsalze enthaltende Waschlösung mittels einer Pumpe vom Bodenbereich eines Rauchgaswaschturms entnommen und über Düsenebenen dem Kopf des Rauchgaswaschturms wieder aufgegeben. Die Konzentration der gelösten Salze in der Waschlösung steigt dabei kontinuierlich, so daß aus dem Waschflüssigkeitskreislauf ständig ein Teil der Waschlösung ausgeschleust werden muß, um die Konzentration konstant zu halten. Die ausgeschleuste Waschlösung wird in einer separaten Oxidationseinrichtung mit Luft oxidiert. Die oxidierte Waschlösung wird der Weiterverarbeitung zugeführt.

Die bekannten Maßnahmen führen zur Bildung von Ammoniumsulfat- und Ammoniumchlorid-Aerosolen, die in herkömmlichen Tropfenabscheidern nicht abgeschieden werden und zu einer deutlich sichtbaren und gefärbten Kaminfahne führen.

Der Erfindung liegt die Aufgabe zugrunde, das Verfahren der eingangs beschriebenen Art so zu führen, daß störende Kaminfahnen nicht auftreten.

Gegenstand der Erfindung und Lösung dieser Aufgabe ist ein Verfahren zur Reinigung von Rauchgasen, die Schwefeloxide und Halogene enthalten, mit folgenden Verfahrensschritten:
1.1) das Rauchgas wird in einem Rauchgas-Vorwaschturm oder in einer Quencheinrichtung angefeuchtet;
1.2) das mit Wasserdampf gesättigte Rauchgas wird in einem ersten Rauchgaswaschturm mit einer Ammoniumsalze enthaltenden Waschlösung, die in einem Waschflüssigkeitskreislauf am Boden des Waschturms abgezogen und der Düsenebene zugeführt wird, gewaschen, wobei dem Waschflüssigkeitskreislauf Ammoniakwasser zugegeben wird, wobei in die Waschlösung im unteren Teil des Waschturms Luft oder Sauerstoff eingeblasen und Ammoniumsulfit und Ammonionhydrogensulfit zu Ammoniumsulfat oxidiert werden und wobei aus dem Waschflüssigkeitskreislauf des ersten Rauchgaswaschturms soviel Waschlösung ausgeschleust wird, daß sich in der Waschlösung ein Salzgehalt von 25 bis 40 Gew.-% einstellt;
1.3) das den ersten Rauchgaswaschturm verlassende Rauchgas wird zum Zwecke einer Schwefeloxid-Restentfernung sowie einer Begrenzung des Ammoniakschlupfes einem zweiten Rauchgaswaschturm zugeführt, der ebenfalls einen den unteren Teil des Waschturms mit der Düsenebene verbindenden Waschflüssigkeitskreislauf einer Ammoniumsalze enthaltenden Waschlösung aufweist, wobei die Konzentration an gelösten Stoffen im Waschflüssigkeitskreislauf des zweiten Rauchgaswaschturms auf maximal 1,1 kg/l begrenzt und der pH-Wert der Waschlösung im unterem Teil des zweiten Waschturms auf einen pH-Wert von pH 3,0 bis pH 5,5 eingestellt wird.

Bevorzugte Ausführungen des Verfahrens sind Gegenstand der nachgeordneten Ansprüche 2 bis 8.

In der Ausführungsform für die Reinigung von Rauchgasen mit niedrigen Gehalten an sauren Komponenten im Rauchgas ist im ersten Rauchgaswaschturm ein Rauchgas-Vorwaschturm vorgeschaltet. Niedrige Gehalte an sauren Komponenten meint Gehalte der Rauchgase an Schwefeloxiden kleiner 2500 bis 2700 mg/Nm³. Die Halogenkonzentration kann beliebig hoch sein. Die Halogene werden stets in dem Rauchgasvorwaschturm entfernt, und störende Aerosole bilden sich nicht.

In der Ausführungsform für die Reinigung von Rauchgasen mit hohen Gehalten an sauren Komponenten im Rauchgas ist im ersten Rauchgaswaschturm eine Quencheinrichtung mit Quenchwasserzuführung vorgeschaltet, in der die Rauchgase sehr weitgehend mit Wasserdampf gesättigt werden. Hohe Gehalte an sauren Komponenten meint Gehalte der Rauchgase an Schwefeloxiden größer als 2700 mg/Nm³. Auch hier kann die Konzentration der Halogene beliebig hoch sein. Ein Teil der Halogene wird in den Rauchgaswaschtürmen, insbesondere in dem ersten Rauchgaswaschturm, entfernt. Zur Abscheidung von Aerosolen, die sich bilden können, wenn das Rauchgas sehr hohe Gehalte an sauren Komponenten aufweist, ist im zweiten Waschturm ein Naßelektrofilter nachgeschaltet, in dem im gereinigten Rauchgas vorhandene Aerosole sicher abgeschieden werden.

Im folgenden wird die Erfindung anhand einer lediglich ein Ausführungsbeispiel darstellenden Zeichnung ausführlicher erläutert. Es zeigen in schematischer Darstellung
- Fig. 1: das Schema einer Anlage zur Durchführung des erfindungsgemäßen Verfahrens,
- Fig. 2: das Anlagenschema einer anderen Ausführungsform.

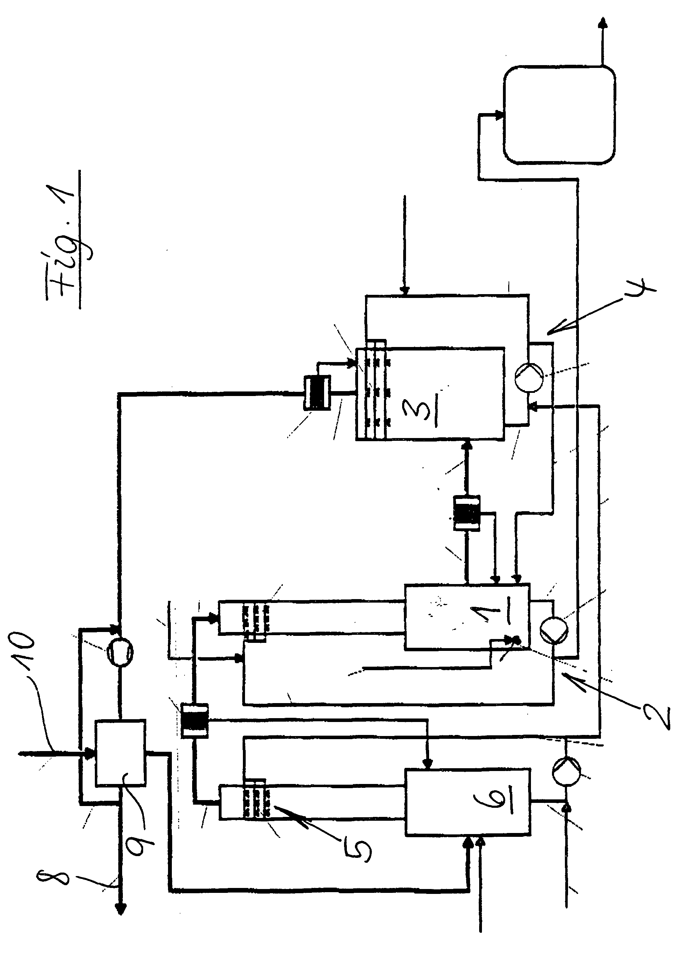

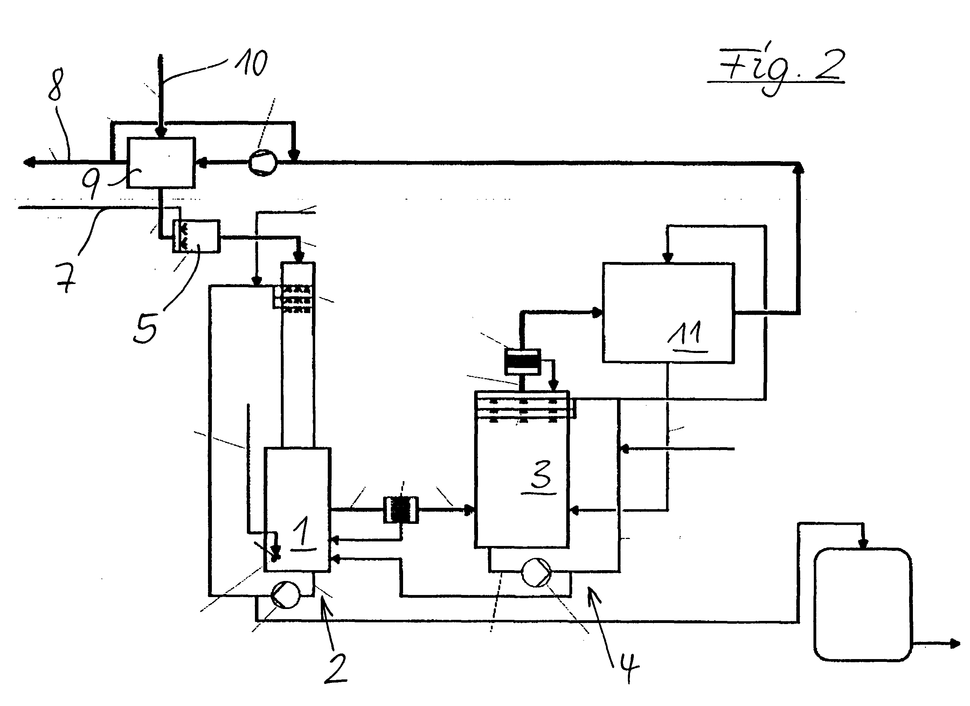

Die Figuren 1 und 2 zeigen eine Anlage zur Reinigung von Rauchgasen, die unterschiedliche Gehalte an sauren Komponenten, insbesondere an Schwefeloxidkomponenten, aufweisen. Es mag sich um Kraftwerksrauchgase handeln, worunter im Rahmen der Erfindung auch die Rauchgase von Müllverbrennungsanlagen fallen. Der Begriff Kraftwerk umfaßt auch Heizkraftwerke. Zum grundsätzlichen Aufbau der Anlage gehören ein erster Rauchgaswaschturm 1 mit Waschflüssigkeitskreislauf 2 und ein zweiter, dem ersten Rauchgaswaschturm nachgeschalteter Rauchgaswaschturm 3 mit Waschflüssigkeitskreislauf 4. Im übrigen ist eine Quencheinrichtung 5 für die zu reinigenden Rauchgase vorgesehen. Die Anordnung und Auslegung sind so getroffen, daß die Quencheinrichtung 5 für eine ausreichende Sättigung der zu reinigenden Rauchgase mit Wasserdampf eingerichtet und der untere Bereich des ersten Rauchgaswaschturms zusätzlich als Oxidationseinrichtung der gesamten Waschlösung eingerichtet ist.

Die Ausführungsform für die Reinigung von Rauchgasen mit im Sinn der schon angegebenen Definition niedrigen Gehalten an sauren Komponenten im Rauchgas ist die Anordnung so getroffen, daß dem ersten Rauchgaswaschturm 1 ein Rauchgas-Vorwaschturm 6 vorgeschaltet und in diesem der Quenchvorgang erfolgt. In der Ausführungsform für die Reinigung von Rauchgasen mit im Sinne der vorstehend angegebenen Definition hohen Gehalten an sauren Komponenten im Rauchgas ist die Anordnung so getroffen, daß dem ersten Waschturm 1 die Quencheinrichtung 5 mit Quenchwasserzuführung 7 vorgeschaltet ist.

Bei der Ausführungsform nach Fig. 1 ist für die Abführung des gereinigten Rauchgases in einen Kamin (Pfeil 8) ein Wärmetaucher 9 vorgesehen, über den außerdem das zu reinigende Rauchgas (Pfeil 10) geführt ist. Der Wärmetauscher 9 ist für die Aufheizung des gereinigten Rauchgases auf Kamintemperatur ausgelegt. Bei der Ausführungsform nach Fig. 2 ist dem zweiten Waschturm 3 ein Naßelektrofilter 11 für die Reinigung des gereinigten Rauchgases und für die Befreiung des gereinigten Rauchgases von den störenden Aerosolen nachgeschaltet. Im übrigen ist auch hier für die Abführung des gereinigten Rauchgases in einen Kamin ein Wärmetauscher 9 angeordnet, über den, wie beschrieben, das zu reinigende Rauchgas geführt ist, wobei der Wärmetauscher 9 für die Aufheizung des gereinigten Rauchgases auf Kamintemperatur ausgelegt ist.

Beim Betrieb der in Fig. 1 dargestellten Anlage werden die zu reinigenden Rauchgase in dem Wärmetauscher abgekühlt und gelangen in den Vorwäscher 6; sie durchströmen diesen. Die Waschlösung wird am Boden des Vorwäschers 6 abgezogen und den Düsenebenen des Vorwäschers 6 zugeführt. Die Halogene werden im Vorwäscher 6 bei pH-Werten ≤ 4,0 vorzugsweise ≤ 3,0 mit einer wäßrigen Lösung absorbiert, wobei der Waschlösung zusätzlich eine wäßrige, alkalische Lösung, vorzugsweise eine wäßrige Natronlaugelösung, zur pH-Stabilisierung zugegeben werden kann. Die Dichte der Waschlösung des Vorwäschers ist begrenzt auf max. 1,1 kg/l, so daß kontinuierlich ein geringer Teil der Waschlösung aus dem Kreislauf ausgeschleust werden muß. Üblicherweise wird der aus dem Vorwäscher 6 ausgeschleuste Lösungsstrom dem Rauchgaswaschturm 3 aufgegeben. Falls gewünscht kann aber auch eine separate Weiterverarbeitung dieser Lösung vorgesehen werden. Das Rauchgas verläßt den Vorwäscher 6 und gelangt in einen Tropfenabscheider, der ein Mitreißen von Flüssigkeiten zuverlässig verhindert. Das Prozeßwasser zur Rauchgassättigung wird dem unteren Teil des Vorwäschers 6 zugeführt. Die Prozeßwassermenge muß so groß sein, daß außer der Rauchgassättigung auch der Niveauausgleich im unteren Teil des Vorwäschers 6 gewährleistet ist. Das Rauchgas gelangt anschließend in den Rauchgaswaschturm 1. Die Waschlösung wird am Boden des Rauchgaswaschturms 1 abgezogen und den Düsenebenen dieses Rauchgaswaschturms 1 zugeführt. Für die Absorption wird der Waschlösung eine wäßrige, alkalische Lösung, vorzugsweise eine wäßrige Ammoniaklösung, zugegeben. Der pH-Wert der Waschlösung im Sumpf des Rauchgaswaschtums 1 wird auf einen Wert von pH 4,0 bis pH 7,0, vorzugsweise pH 4,5 bis pH 5,5, eingestellt. Die Waschlösung wird im oberen Teil des Rauchgaswaschturms 1 über eine oder mehrere Düsenebenen gleichmäßig über den Wäscherquerschnitt verteilt. Dabei ist es möglich, den pH-wert der Waschlösung vor der Eindüsung an jeder Ebene unterschiedlich einzustellen. Bei der Schwefeldioxid-Absorption bildet sich eine wäßrige Phase von Ammoniumhydrogensulfit, das mit Ammoniak weiterreagiert, zu Ammoniumsulfit. Mit dem in der Waschlösung enthaltenen Sauerstoff reagiert ein Teil des Ammoniumsulfit weiter zu Ammoniumsulfat. Der Vorteil der möglichst vollständigen Oxidation der Waschlösung liegt in dem erheblich niedrigeren Ammoniakpartialdruck des Ammoniumsulfat gegenüber Ammoniumsulfit/Ammoniumhydrogensulfit. Dadurch sinkt das Aerosolbildungspotential entsprechend ab. Deshalb wird der nichtoxidierte Teil des Ammoniumsulfits durch Einsatz einer Oxidationseinrichtung zum Ammoniumsulfat oxidiert. Die Oxidation wird durch Einblasen von Luft oder Sauerstoff in den unteren Teil des Rauchgaswaschturms 1 und intensivste Verwirbelung mit Hilfe von geeigneten Rührwerkzeugen erzwungen. Da der Stoffübergang des Sauerstoffes in die Waschlösung begrenzt ist, muß das Volumen im unteren Teil des Rauchgaswaschturms 1 der zu oxidierenden Ammoniumsulfitmenge angepaßt werden. Die Oxidation wird so betrieben, daß sich die Ammoniumsulfit/Ammoniumhydrogensulfit-Konzentration der Waschlösung 0 bis 10 g/l, vorzugsweise zwischen 0,5 bis 3,0 g/l einstellt. Aus dem Kreislauf des Rauchgaswaschturms 1 wird soviel Waschlösung ausgeschleust, daß sich der Salzgehalt der Waschlösung bei etwa 25 bis 40 Gew.-%, vorzugsweise bei etwa 28 bis 30 Gew.-%, einstellt. Die ausgeschleuste Waschlösung fließt in einen Sammelbehälter, wo eine Restoxidation durchgeführt werden kann. Für die ausgeschleuste Waschlösung stehen verschiedene, in der Industrie erprobte Verfahren zur Weiterbehandlung zur Verfügung. Das Rauchgas verläßt den Rauchgaswaschturm 1 über einen Tropfenabscheider, der ein Mitreißen von Flüssigkeit zuverlässig verhindert. Das Rauchgas gelangt danach in den Rauchgaswaschturm 3. Die Waschlösung wird am Boden abgezogen und einer oder mehreren Düsenebenen im oberen Teil des Rauchgaswachturms 3 zugeführt. Die Waschlösung hat nur eine geringe Konzentration an gelösten Stoffen. Ihre Dichte ist auf max. 1,1 kg/l begrenzt. Der pH-Wert der Waschlösung im unteren Teil des Rauchgaswaschturms 3 wird auf einen pH-Wert von pH 3,0 bis pH 5,5, vorzugsweise pH 4,0 bis pH 4,5, eingestellt. Zu diesem Zweck können geringe Mengen wäßriger Ammoniaklösung zugegeben werden. Der niedrige pH-Wert der Waschlösung verringert zuverlässige den NH₃-Schlupf auf weniger als 10 mg/Nm³. Die Waschlösung aus dem Rauchgaswaschturm 3 wird zum Niveauausgleich dem Rauchgaswaschturm 1 zugegeben. Das Niveau im Rauchgaswaschturm 3 wird durch Waschlösung aus dem Vorwäscher 6 ausgeglichen. Außer der ausgeschleusten Waschlösung, die ein Wertstoff ist, fallen bei diesem Prozeß keinerlei feste oder flüssige Reststoffe an. Das Rauchgas verläßt den Rauchgaswaschturm 3 über einen Tropfenabscheider, der ein Mitreißen von Flüssigkeit zuverlässig verhindert. Das nunmehr von sauren Komponenten weitgehend gereinigte Rauchgas passiert, gefördert durch ein Gebläse, den Wärmetauscher 9 und wird dort durch nicht entschwefeltes, heißes Rauchgas wieder soweit aufgeheizt, daß es ohne Zusatz von Fremdenergie in den Kamin geleitet werden kann. Um Kondensation und eventuell damit zusammenhängende Ablagerungen zuverlässig zu verhindern, kann ein Teil des gereinigten Rauchgases nach Austritt aus dem Wärmetauscher 9 auf die Saugseite des Gebläses zurückgeleitet werden, um die Temperatur des Rauchgases vor dem Gebläse über den Wasserdampf-Taupunkt anzuheben.

Bei der Ausführungsform nach Fig. 2 für hohe Schwefeloxidkonzentrationen entfällt der Vorwäscher 6. Das Rauchgas gelangt in die Quencheinrichtung 5 und wird dort mit Wasser gesättigt. Das Rauchgas gelangt danach direkt in den Rauchgaswaschturm 1. Die Bildung von Aerosolen kann durch sinnvolle verfahrenstechnische Maßnahmen nicht mehr unterdrückt werden. Deshalb ist ein höherer Salzgehalt bis knapp unter die Sättigungsgrenze von ca. 40 Gew.-% in der Waschlösung möglich. Zur Aerosolabscheidung ist ein Naßelektrofilter 11 eingesetzt. Nachdem das Rauchgas den Rauchgaswaschturm 3 verlassen und den anschließenden Tropfenabscheider passiert hat, gelangt es in das Naßelektrofilter 11. Da die abgeschiedenen Aerosole sehr gut wasserlöslich sind, können Anbackungen an die Niederschlagselektroden durch Bedüsung mit Wasser oder Waschlösung sicher vermieden werden. Die aus dem Naßelektrofilter ablaufende Lösung wir dem Prozeß wieder zugeführt. Die Konzentration der Aerosole nach dem Naßelektrofilter liegt sicher unter 15 mg/Nm³, so daß eine Sichtbarkeit der Kaminfahne durch Aerosole nicht mehr eintreten kann.

## Patentansprüche

1. Verfahren zur Reinigung von Rauchgasen, die Schwefeloxide und Halogene enthalten, mit folgenden Verfahrensschritten:
1.1) das Rauchgas wird in einem Rauchgas-Vorwaschturm oder in einer Quencheinrichtung angefeuchtet;
1.2) das mit Wasserdampf gesättigte Rauchgas wird in einem ersten Rauchgaswaschturm mit einer Ammoniumsalze enthaltenden Waschlösung, die in einem Waschflüssigkeitskreislauf am Boden des Waschturms abgezogen und der Düsenebene zugeführt wird, gewaschen, wobei dem Waschflüssigkeitskreislauf Ammoniakwasser zugegeben wird, wobei in die Waschlösung im unteren Teil des Waschturms Luft oder Sauerstoff eingeblasen und Ammoniumsulfit und Ammonionhydrogensulfit zu Ammoniumsulfat oxidiert werden und wobei aus dem Waschflüssigkeitskreislauf des ersten Rauchgaswaschturms soviel Waschlösung ausgeschleust wird, daß sich in der Waschlösung ein Salzgehalt von 25 bis 40 Gew.-% einstellt;
1.3) das den ersten Rauchgaswaschturm verlassende Rauchgas wird zum Zwecke einer Schwefeloxid-Restentfernung sowie einer Begrenzung des Ammoniakschlupfes einem zweiten Rauchgaswaschturm zugeführt, der ebenfalls einen den unteren Teil des Waschturms mit der Düsenebene verbindenden Waschflüssigkeitskreislauf einer Ammoniumsalze enthaltenden Waschlösung aufweist, wobei die Konzentration an gelösten Stoffen im Waschflüssigkeitskreislauf des zweiten Rauchgaswaschturms auf maximal 1,1 kg/l begrenzt und der pH-Wert der Waschlösung im unterem Teil des zweiten Waschturms auf einen pH-Wert von pH 3,0 bis pH 5,5 eingestellt wird.

2. Verfahren nach Anspruch 1, wobei die Oxidation im unteren Teil des ersten Rauchgaswaschturms so betrieben wird, daß sich eine Ammoniumsulfit/Ammoniumhydrogensulfit-Konzentration der Waschlösung von maximal 10 g/l, vorzugsweise von 0,5 bis 3,0 g/l, einstellt.

3. Verfahren nach Anspruch 1 oder 2, wobei der pH-Wert der Waschlösung im unteren Teil des ersten Rauchgaswaschturms auf einen Wert von pH 4,0 bis pH 7,0, vorzugsweise pH 4,5 bis pH 5,5, eingestellt wird.

4. Verfahren nach einem der Ansprüche 1 bis 3, wobei ein aus dem Waschflüssigkeitskreislauf des zweiten Rauchgaswaschturms abgezogener Waschlösungsteilstrom zum Niveauausgleich dem ersten Rauchgaswaschturm zugegeben wird.

5. Verfahren nach einem der Ansprüche 1 bis 4, wobei der erste Rauchgaswaschturm im Gleichstrom und der zweite Rauchgaswaschturm im Gegenstrom betrieben werden.

6. Verfahren nach einem der Ansprüche 1 bis 5, wobei das Rauchgas im Verfahrensschritt 1.1) zum Zwecke der selektiven Abscheidung von Halogenen in einem Rauchgas-Vorwaschturm mit einer wäßrigen Lösung bei einem pH-Wert von kleiner pH 4, vorzugsweise kleiner pH 3, gewaschen wird.

7. Verfahren nach Anspruch 6, wobei in dem ersten Rauchgaswaschturm ein Salzgehalt von 28 bis 30 Gew.-% eingestellt wird.

8. Verfahren nach einem der Ansprüche 1 bis 5, wobei das Rauchgas im Verfahrensschritt 1.1) durch Zugabe von Quenchflüssigkeit mit Wasser gesättigt wird, wobei in der Waschlösung des ersten Rauchgaswaschturms ein Salzgehalt knapp unter der Sättigungsgrenze von 40 Gew.-% eingestellt wird und das den zweiten Rauchgaswaschturm verlassende gereinigte Rauchgas durch ein Naßelektrofilter geführt wird.

## Claims

1. A process for the purification of flue gases which contain sulphur oxides and halogens, comprising the following process steps:
1.1) the flue gas is humidified in a flue gas preliminary scrubbing tower or in a quenching device;
1.2) the flue gas which is saturated with water vapour is scrubbed in a first flue gas scrubbing tower with a scrubbing solution which contains ammonia salts and which is taken off in a scrubbing liquid circuit at the bottom of the scrubbing tower and is fed to the plane of the injectors, wherein an ammonia solution is added to the scrubbing liquid circuit, wherein air or oxygen is blown into the scrubbing solution in the bottom part of the scrubbing tower and ammonium sulphite and ammonium hydrogen sulphite are oxidised to ammonium sulphate, and wherein an amount of scrubbing solution is transferred out of the scrubbing liquid circuit of the first flue gas scrubbing tower such that the salt content of the scrubbing solution is 25 to 40 per cent by weight;
1.3) the flue gas leaving the first flue gas scrubbing tower is fed to a second flue gas scrubbing tower for the purpose of removing residual sulphur oxides and for limiting the slip of ammonia, which second flue gas scrubbing tower likewise comprises a scrubbing liquid circuit for a scrubbing solution which contains ammonium salts and which connects the bottom part of the scrubbing tower to the plane of the injectors, wherein the concentration of dissolved substances in the scrubbing liquid circuit of the second flue gas scrubbing tower is limited to a maximum of 1.1 kg/litre, and the pH of the scrubbing solution in the bottom part of the second scrubbing tower is set to a pH ranging from pH 3.0 to pH 5.5.

2. A process according to claim 1. wherein the oxidation in the bottom part of the first flue gas scrubbing tower is operated so that the maximum ammonium sulphite/ammonium hydrogen sulphite concentration of the scrubbing solution is 10 g/litre, said concentration preferably being 0.5 to 3.0 g/litre.

3. A process according to claims 1 or 2, wherein the pH of the scrubbing solution in the bottom part of the first flue gas scrubbing tower is set to a value of pH 4.0 to pH 7.0, preferably pH 4.5 to pH 5.5.

4. A process according to any one of claims 1 to 3. wherein a partial stream of scrubbing solution which is taken off from the scrubbing liquid circuit of the second flue gas scrubbing tower is fed to the first flue gas scrubbing tower in order to make up the level therein.

5. A process according to any one of claims 1 to 4, wherein the first flue gas scrubbing tower is operated in co-current flow and the second flue gas scrubbing tower is operated in counter-current flow.

6. A process according to any one of claims 1 to 5. wherein in process step 1.1) the flue gas is scrubbed with an aqueous solution at a pH less than pH 4. preferably less than pH 3, for the purpose of selectively separating halogens in a flue gas preliminary scrubbing tower.

7. A process according to claim 6, wherein a salt content of 28 to 30 per cent by weight is set in the first flue gas scrubbing tower.

8. A process according to any one of claims 1 to 5, wherein in process step 1.1) the flue gas is saturated with water by the addition of quenching liquid, wherein a salt content just below the saturation limit of 40 per cent by weight is set in the scrubbing solution of the first flue gas scrubbing tower, and the purified flue gas leaving the second flue gas scrubbing tower is passed through a wet electrostatic filter.

## Revendications

1. Procédé d'épuration de gaz de fumée qui contiennent des oxydes de soufre et des halogènes, comportant les étapes suivantes :
1.1) les gaz de fumée sont humidifiés dans une tour de prélavage de gaz de fumée ou dans un dispositif d'extinction ;
1.2) les gaz de fumée saturés en vapeur d'eau sont lavés, dans une première tour de lavage de gaz de fumée, avec une solution de lavage qui contient des sels d'ammonium et qui est extraite dans un circuit de liquide de lavage, au fond de la tour de lavage et acheminée vers le plan de buses, de l'eau ammoniacale étant ajoutée au circuit du liquide de lavage, de l'air ou de l'oxygène étant insufflé dans la solution de lavage, dans la partie inférieure de la tour de lavage, et le sulfite d'ammonium ainsi que l'hydrogénosulfite d'ammonium sont oxydés en sulfate d'ammonium, et une quantité suffisante de solution de lavage est retirée du circuit de liquide de lavage de la première tour de lavage des gaz de fumée, pour qu'il s'établisse dans la solution de lavage une teneur en sels de 25 à 40 % en poids ;
1.3) les gaz de fumée qui sortent de la première tour de lavage de gaz de fumée sont acheminés, dans le but d'éliminer l'oxyde de soufre résiduel ainsi que de limiter le dégagement d'ammoniac, vers une deuxième tour de lavage de gaz de fumée, qui comporte également un circuit de liquide de lavage d'une solution de lavage contenant des sels d'ammonium, lequel circuit relie la partie inférieure de la tour de lavage au plan des buses, la concentration en substances dissoutes dans le circuit de liquide de lavage de la deuxième tour de lavage de gaz de fumée étant limitée à 1,1 kg/l au maximum et le pH de la solution de lavage dans la partie inférieure de la deuxième tour de lavage étant réglé sur une valeur de pH comprise entre 3,0 et 5,5.

2. Procédé selon la revendication 1, dans lequel l'oxydation dans la partie inférieure de la première tour de lavage de gaz de fumée est conduite de manière que la concentration en sulfite d'ammonium/hydrogénosulfite d'ammonium de la solution de lavage s'établisse à 10 g/l au maximum, de préférence entre 0,5 et 3,0 g/l.

3. Procédé selon la revendication 1 ou 2, dans lequel le pH de la solution de lavage dans la partie inférieure de la première tour de lavage de gaz de fumée est réglé sur une valeur comprise entre 4,0 et 7,0, de préférence entre 4,5 et 5,5.

4. Procédé selon l'une des revendications 1 à 3, dans lequel un courant partiel de solution de lavage, soutiré du circuit de liquide de lavage de la deuxième tour de lavage de gaz de fumée, est ajouté à la première tour de lavage des gaz de fumée pour compenser le niveau.

5. Procédé selon l'une des revendications 1 à 4, dans lequel on fait fonctionner la première tour de lavage des gaz de fumée en courant parallèle et la deuxième tour de lavage des gaz de fumée, à contre-courant.

6. Procédé selon l'une des revendications 1 à 5, dans lequel les gaz de fumée sont lavés au cours de l'étape de procédé 1.1), dans le but de la séparation sélective des halogènes, dans une tour de prélavage des gaz de fumée avec une solution aqueuse d'un pH inférieur à 4, de préférence inférieur à 3.

7. Procédé selon la revendication 6, dans lequel les gaz de fumée sont saturés en eau, au cours de l'étape de procédé 1.1), par addition de liquide d'extinction, une teneur en sels à peine inférieure à la limite de saturation de 40 % en poids étant réglée dans la solution de lavage de la première tour de lavage de gaz de fumée, et les gaz de fumée épurés qui sortent de la deuxième tour de lavage des gaz de fumée étant conduits à travers un électrofiltre humide.

8. Procédé selon l'une des revendications 1 à 5, dans lequel les gaz de fumée sont saturés en eau au cours de l'étape 1.1) par addition de liquide d'extinction, dans lequel une teneur en sels est réglée juste au-dessous de la limite de saturation de 40 % en poids, dans la solution de lavage de la première tour de lavage des gaz de fumée, et les gaz épurés, qui quittent la deuxième tour de lavage des gaz de fumée, sont acheminés à travers un électrofiltre humide.
